# EUROPÄISCHE PATENTSCHRIFT

(11) **EP 3 805 635 B1**
(45) Veröffentlichungstag und Bekanntmachung des Hinweises auf die Patenterteilung: **03.06.2026**
(21) Anmeldenummer: 20200317.4
(22) Anmeldetag: 06.10.2020
(51) Int. Cl.: F21V 3/02, F21V 5/00, F21V 7/00, B29D 11/00, F21V 3/06, F21V 5/04, F21V 31/00, F21Y 103/10, F21Y 105/10, F21Y 115/10

(54) **BELEUCHTUNGSEINRICHTUNG MIT LINSE AUS SILIKONDRUCK**
LIGHTING DEVICE WITH SILICONE PRINT LENS
DISPOSITIF D'ÉCLAIRAGE POURVU DE LENTILLE EN IMPRIMÉ SILICONE

(30) Priorität: 07.10.2019 DE 102019126884
(43) Veröffentlichungstag der Anmeldung: 14.04.2021
(73) Patentinhaber: Siteco GmbH, 83301 Traunreut (DE)
(72) Erfinder: Eichele, Timo, 83362 Surberg (DE); Kudlek, Michael, 83349 Palling (DE)
(74) Vertreter: Schmidt, Steffen

(56) Entgegenhaltungen:
- EP-A1- 3 165 818
- US-A1- 2011 128 739
- US-A1- 2019 011 095
- US-B1- 8 328 403

## Beschreibung

Die vorliegende Erfindung betrifft eine Beleuchtungseinrichtung, z.B. eine Innen- oder Außenleuchte, mit einer lichttechnischen Abdeckung und einer LED sowie einem Linsenkörper zwischen der LED und der Abdeckung.

Im Stand der Technik ist es üblich, Linsen für Beleuchtungseinrichtungen mit LEDs (light-emitting diodes, worunter hier jede Form von Halbleiterlichtquellen einschließlich organischer Halbleiterlichtquellen verstanden werden) im Spritzgussverfahren herzustellen. Dabei sind Kunststoffe, insbesondere PC oder PMMA, gebräuchlich. Seltener kommen auch Glas oder Silikon zum Einsatz. Die Verarbeitungskosten für Glas oder Silikon sind jedoch höher im Vergleich zu PC oder PMMA. Silikon oder Glas haben aber auch den Vorteil, dass sie eine höhere Temperaturbeständigkeit aufweisen. Die Vorteile von Silikonlinsen als Beleuchtungsoptik sind beispielsweise in der DE 10 2016 104 546 A1 beschrieben. Vorteile von Silikon gegenüber Kunststoff sind u.a. die höhere Lichtbeständigkeit, d.h. es gibt keine Vergilbung oder Versprödung, wodurch auch eine Steigerung der Helligkeit der Leuchte bei gegebenen Energieverbrauch ermöglicht wird.

In der WO 2012/031703 A1 ist ferner beschrieben, dass es auch möglich ist, nicht nur Einzellinsen mit einer Silikonlinse zu versehen, sondern auch eine komplette LED-Platine, auf der mehrere LEDs nebeneinander angeordnet sind, mit Silikon zu umspritzen. Ferner ist auch beschrieben, dass in dem Silikon Partikel beigemischt werden, um eine lichtstreuende Wirkung zu erzeugen. Außerdem können fluoreszierende Materialien in dem Silikonmaterial enthalten sein, um eine Wellenlängenverschiebung, d.h. eine Farbänderung des Lichts der LED, zu bewirken.

Um den Nachteil der Linsen aus PC und PMMA zu überwinden, d.h. insbesondere um die höhere Temperaturbeständigkeit der Linse zu erzielen, kann prinzipiell auch Glas eingesetzt werden. Glas kann im flüssigen Zustand jedoch nicht auf die Linse aufgebracht werden, weil das flüssige Glas aufgrund der hohen Temperatur die LED sofort beschädigen würde. Somit ist ein Verguss der LED mit Glas nicht möglich. Es wird daher das aufwendigere Verfahren zum Umspritzen der LED mit Silikon oder ein 3D-Druck-Verfahren zum Aufbringen von Silikonlinsen auf die LED eingesetzt. Jedoch hat auch dieses Verfahren den Nachteil, dass die LED selbst oder elektronische Komponenten an der LED durch das Umspritzen bzw. Aufdrucken beschädigt werden können.

US 2019/011095 A1 offenbart eine Beleuchtungseinrichtung gemäß dem Oberbegriff des Anspruchs 1. Weitere Beleuchtungseinrichtungen mit lichttechnischen Abdeckungen sind in der US 2011/128739 A1 und US 8 328 403 B1 offenbart.

Aufgabe der vorliegenden Erfindung ist es daher eine Beleuchtungseinrichtung sowie ein Herstellungsverfahren für eine solche Beleuchtungseinrichtung bereitzustellen, welche es ermöglichen, ein temperatur- und alterungsbeständiges Linsenmaterial zu verwenden, dabei die empfindliche LED bzw. deren Elektronik zu schützen und dennoch möglichst kostengünstig die Beleuchtungseinrichtung herstellen zu können.

Gelöst wird die Aufgabe durch eine Beleuchtungseinrichtung nach Anspruch 1 sowie durch ein Herstellungsverfahren nach Anspruch 11.

Eine Besonderheit der Beleuchtungseinrichtung sowie deren Herstellungsverfahren gemäß der vorliegenden Erfindung besteht darin, dass mittels 3D-Druck ein Silikonmaterial zur Bindung eines Linsenkörpers auf eine lichttechnisch Abdeckung an einer der LED gegenüberliegenden Oberfläche aufgedruckt wird. Dadurch ist es nicht mehr erforderlich, das Linsenmaterial direkt an der LED aufzubringen. Ferner ist das Linsenmaterial nach außen ebenfalls geschützt, weil es unterhalb der Abdeckung, die beispielsweise aus Glas oder einem transparentem Kunststoffmaterial in herkömmlicher Bauweise gefertigt sein kann, geschützt ist. Durch den 3D-Druck sind die Gestaltungsmöglichkeiten für die Linsenkörper sehr groß. Es lassen sich insbesondere Freiformlinsen ausbilden, welche eine große Bandbreite gewünschter Lichtverteilungen für einzelne LEDs hervorbringen können. Da der Linsenkörper der individuellen LED zugeordnet ist, lassen sich sogar Lichtverteilungen für verschiedene LEDs unterschiedlich ausgestalten. Während bei einer herkömmlichen Vorsatzlinse mehrere Luftspalte gebildet sind, beispielsweise Luftspalte zwischen der LED und der Linse sowie der Linse zu der Abdeckung, können diese Luftspalte in den Ausführungsformen der vorliegenden Erfindung vollständig entfallen. Da der Linsenkörper direkt auf die Oberfläche der lichttechnischen Abdeckung, welche zur LED weist, aufgedruckt wird, muss kein Luftspalt zwischen der Abdeckscheibe und der LED vorgesehen sein. Andererseits kann sich der Linsenkörper auch so weit erstrecken, dass er in Kontakt mit der LED gerät. Dabei ist Silikon auch von besonderem Vorteil, weil es weich genug ist, um thermische Verspannungen zwischen der LED und den angrenzenden Bauteilen zu vermeiden, wenn Bestandteile der Beleuchtungseinrichtung, insbesondere die Platine, auf der die LED angeordnet ist, sich gegenüber der lichttechnischen Abdeckung unterschiedlich thermisch ausdehnen.

Gemäß einer bevorzugten Ausführungsform ist der Linsenkörper aus unterschiedlichen Silikonmaterialien mit verschiedenen Brechungsindices gedruckt. Da das Silikonmaterial für den Linsenkörper in 3D-Druck aufgebracht wird, lassen sich nicht nur durch die Formgebung sondern auch durch die Art der Materialien die Lichtlenkung in dem Linsenkörper individuell einrichten. Ferner ist das Aufbringen unterschiedlicher Silikonmaterialien durch das Verfahren im 3D-Druck einfach zu bewerkstelligen.

Gemäß einer bevorzugten Ausführungsform berührt der Linsenkörper mit einer Kontaktfläche die LED. Dadurch kann Licht der LED direkt in den Linsenkörper eintreten, ohne dass es zu einer Fresnell-Reflektion an dem Übergang zwischen der LED und dem Linsenkörper kommt. Der Wirkungsgrad der Beleuchtungseinrichtung lässt sich dadurch erhöhen. Von Vorteil ist dabei, dass das Silikonmaterial verhältnismäßig weich ausgebildet sein kann. Dadurch ist selbst beim vollständigen Überbrücken des Raums zwischen der lichttechnischen Abdeckung und der LED bei thermischen Verspannungen oder bei mechanischen Einwirkungen keine Bruchgefahr gegeben. Mit herkömmlichen Linsenmaterialien, z.B. einem Kunststoff oder Glas, wäre eine solche Konstruktion nicht möglich, weil bereits thermische Spannungen im Material dazu führen würden, dass die LED oder die Abdeckung beschädigt werden könnte. Bei herkömmlichen Linsenmaterialien ist daher eine Dehnungsfuge notwendig, die jedoch lichttechnisch nachteilhaft sein kann. Beim Material Silikon entfällt dieses Problem. Erfindungsgemäß weist der Linsenkörper auf wenigstens einer der LED zugewandten Oberfläche einer domförmigen Erhebung der Abdeckung eine Mikrostruktur auf, die räumliche Erhebungen und/oder Vertiefungen definieren, deren Abmessungen kleiner als ein mittlerer Durchmesser der LED sind. Durch die Mikrostruktur lässt sich beispielsweise das Licht, welches in den Linsenkörper eintritt, durch Streuung aufweiten. Eine solche Struktur kann daher z.B. für eine Entblendung sorgen. Die Mikrostruktur kann jedoch auch in der Art einer Fresnell-Linse eine gezielte Lichtbeeinflussung zur Bündelung oder Aufweitung des von der LED abgegebenen Strahlenbündels bewirken. Die Mikrostruktur kann allgemeine Prismenelemente oder wellenförmige Erhebungen bzw. Vertiefungen umfassen. Als Abmessung der Mikrostruktur wird die mittlere Ausdehnung einer Erhebung oder Vertiefung entlang einer Raumrichtung parallel zu einer Ebene der Abdeckung definiert.

Gemäß einer bevorzugten Ausführungsform sind mehrere der genannten Linsenkörper in 3D-Druck, insbesondere in einer oder mehreren Reihen hintereinander, auf die Oberfläche der Abdeckung gedruckt. Die Lichtverteilungen der Linsenkörper überlagern sich, und bilden dadurch die Gesamtlichtverteilung der Beleuchtungseinrichtung. Dabei ist auch die Möglichkeit gegeben, dass die Linsenkörper unterschiedlicher LEDs verschiedene Lichtverteilungen erzeugen.

Gemäß einer bevorzugten Ausführungsform weist die Abdeckung ferner noch eine Silikondichtung auf, die ebenfalls in 3D-Druck auf die Abdeckung aufgedruckt ist, und die Silikondichtung dichtet die Abdeckung in der Beleuchtungseinrichtung gegenüber einem Gehäusewandabschnitt der Beleuchtungseinrichtung ab. Da die Abdeckung ohnehin mit Silikon bedruckt wird, lässt sich in demselben Herstellungsprozess eine Silikondichtung einfach integrieren. Der Aufwand ist im Vergleich zu einer separat hergestellten Dichtung, welche zwischen die Abdeckung und Gehäusewändeabschnitten der Beleuchtungseinrichtung eingelegt oder eingeklebt wird, vereinfacht.

Gemäß einer bevorzugten Ausführungsform ist die lichttechnische Abdeckung selbst als eine Freiformlinse ausgebildet, und weist insbesondere Seitenwände auf, die gegenüber der LED und dem Linsenkörper so geneigt sind, dass Licht der LED, welches durch den Linsenkörper in die Abdeckung eintritt, an den Seitenwänden totalreflektiert wird. In dieser Ausführungsform bewirkt die Abdeckung selbst auch eine Lichtlenkung, die ergänzend zu der Lichtlenkung in dem Linsenkörper zur Gesamtlichtverteilung der Beleuchtungseinrichtung beiträgt. Dabei kann sich auch der Brechungsindex zwischen dem transparenten Material der lichttechnischen Abdeckung und dem Linsenkörper aus Silikon unterscheiden. Dadurch lässt sich auch an der Grenzfläche zwischen der lichttechnischen Abdeckung und dem Linsenkörper eine Lichtlenkung durch Lichtbrechung nutzen. Ferner erfolgt dadurch eine effiziente Einkopplung des Lichts von der LED in die lichttechnische Abdeckung, weil an der Grenzfläche zwischen dem Linsenkörper und der lichttechnischen Abdeckung eine geringere Änderung des Brechungsindex vorliegt im Vergleich zu einer Konstruktion, bei welcher das Licht über einen Luftspalt in eine als Freiformlinse ausgebildete lichttechnische Abdeckung eintritt.

Gemäß einer bevorzugten Ausführungsform ist der Linsenkörper aus 3D-Druck rotationssymmetrisch in Bezug auf eine optische Achse der LED geformt. Diese Ausführungsform ist für Beleuchtungseinrichtungen geeignet, welche eine möglichst symmetrische Lichtverteilung um die optische Achse der Beleuchtungseinrichtung erzeugen soll.

Weitere Vorteile und Merkmale der vorliegenden Erfindung werden aus der nachfolgenden Beschreibung bevorzugter Ausführungsformen, die in Verbindung mit den beigefügten Figuren beschrieben werden, deutlich. In den Figuren ist folgendes dargestellt:
- Figur 1: zeigt einen Querschnitt durch eine Beleuchtungseinrichtung in herkömmlicher Bauweise.
- Figur 2: zeigt einen Querschnitt einer Beleuchtungseinrichtung gemäß einer nicht erfindungsgemäßen Ausführungsform mit einem Hohlraum zwischen dem Linsenkörper und der Abdeckung.
- Figur 3: zeigt einen Querschnitt durch eine Beleuchtungseinrichtung gemäß einer weiteren nicht erfindungsgemäßen Ausführungsform mit einem Hohlraum in dem Linsenkörper.
- Figur 4: zeigt eine perspektivische Ansicht einer Abdeckung einer nicht erfindungsgemäßen Ausführungsform mit Silikondichtung.
- Figur 5: zeigt einen Querschnitt durch eine Beleuchtungseinrichtung gemäß einer weiteren nicht erfindungsgemäßen Ausführungsform mit einem Spalt zwischen der LED und dem Linsenkörper.
- Figur 6: zeigt einen Querschnitt durch eine Beleuchtungseinrichtung gemäß einer weiteren nicht erfindungsgemäßen Ausführungsform, bei welcher die LED in Kontakt mit dem Linsenkörper ist.
- Figur 7: zeigt einen Querschnitt durch eine Beleuchtungseinrichtung gemäß einer erfindungsgemäßen Ausführungsform, bei welcher die Abdeckung als Freiformlinse ausgeführt ist.
- Figur 8: zeigt einen Querschnitt durch eine Beleuchtungseinrichtung gemäß einer weiteren nicht erfindungsgemäßen Ausführungsform mit einem sphärischen Linsenkörper.
- Figur 9: zeigt einen Querschnitt durch eine Beleuchtungseinrichtung gemäß einer weiteren nicht erfindungsgemäßen Ausführungsform mit einer Mikrostruktur an der Abdeckung.
- Figur 10: zeigt einen Querschnitt durch eine Beleuchtungseinrichtung gemäß einer weiteren nicht erfindungsgemäßen Ausführungsform mit mehreren LEDs und einer Mikrostruktur an der Abdeckung.
- Figur 11: zeigt einen Querschnitt durch eine Beleuchtungseinrichtung gemäß einer weiteren nicht erfindungsgemäßen Ausführungsform mit einer Kombination aus einem bis zur LED weisenden Linsenkörper und einer Mikrostruktur an der Abdeckung.

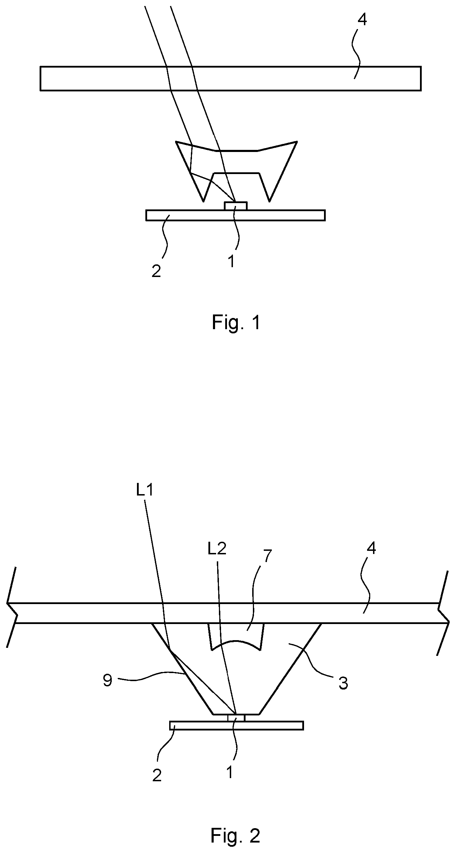

Ein schematischer Aufbau einer herkömmlichen Beleuchtungseinrichtung mit einer Linse zwischen einer LED und einer lichttechnischen Abdeckung ist in Figur 1 dargestellt. Die Linse, welche in dem gezeigten Fall auch eine Linse mit einem Abschnitt für Totalreflexion ist, wird zwischen der LED 1 und der Abdeckung 4 angeordnet. Bei Ein- und Austritt der Lichtstrahlung in die bzw. aus der Linse erfolgt Lichtlenkung durch Brechung. Ferner sind auch Bereiche enthalten, an denen Totalreflexion stattfindet. In dieser Bauform ist jedoch die Positionierung der Linse gegenüber der LED verhältnismäßig aufwendig. Die Linse kann zwar einfach als ein Kunststoffspritzgusselement hergestellt werden. Jedoch ist es erforderlich, die Linse genau über der LED mit einer separaten Befestigungseinrichtung (in der Figur 1 nicht dargestellt) zu positionieren.

Figur 2 zeigt demgegenüber eine erste nicht erfindungsgemäße Ausführungsform. Die Beleuchtungseinrichtung dieser Ausführungsform weist eine LED 1 auf einer Platine 2, auch als PCB bezeichnet, auf. Die Beleuchtungseinrichtung ist ferner durch eine lichttechnische Abdeckung 4 geschlossen. In der dargestellten Ausführungsform gemäß Figur 2 ist die lichttechnische Abdeckung 4 eine transparente Platte, z.B. eine Glasplatte oder eine Platte aus einem transparenten Kunststoff. Auf der Abdeckung 4 wird vor dem Zusammenbau der Beleuchtungseinrichtung ein Linsenkörper 3 aus Silikon im 3D-Druckverfahren aufgedruckt. Der Linsenkörper 3 ist daher fest mit der Abdeckung 4 verbunden. Nach der Montage der Abdeckung 4 in der Beleuchtungseinrichtung steht der Linsenkörper 3 in direktem Kontakt mit der LED 1. Dadurch kann die Lichtstrahlung L1 und L2 der LED 1 direkt in den Linsenkörper 3 ohne einen Übergang durch einen Luftspalt in den Linsenkörper eindringen. Der Lichtstrahl 1 wird durch Totalreflexion an einer Grenzfläche 9 des Linsenkörpers 3 reflektiert und ferner beim Übertritt von dem Linsenkörper 3 in die Abdeckung 4 gebrochen. Eine weitere Lichtlenkung findet beim Austritt des Lichtstrahls aus der Abdeckung 4 statt. Ferner ist ein Hohlraum 7 zwischen der Abdeckung 4 und dem Material des Linsenkörpers 3 gebildet. Der Hohlraum 7 weist eine sphärische Oberfläche auf, an welcher ein Lichtstrahl 2 beim Austritt aus dem Linsenkörper 3 und vor Eintritt in die Abdeckung 4 gebrochen wird. Der Hohlraum 7 kann gemäß einer Ausführungsform während des 3D-Drucks des Linsenkörpers 3 gebildet werden. Dazu wird beim Druck des Linsenkörpers 3 ein Stützmaterial in dem Bereich aufgebracht, welcher später den Hohlraum 7 bildet. Das Stützmaterial wird nach Drucken der Linsenkörpers 3 ausgewaschen. Dazu ist eine kleine Öffnung (in der Figur nicht dargestellt) zwischen dem Raumbereich, in welchem später der Hohlraum 7 gebildet wird, und einer Außenfläche des Linsenkörpers 3 erforderlich. Nach Auswaschen des Stützmaterials kann diese Öffnung auch wieder verschlossen werden, z.B. durch das gleich Silikonmaterial wie der Linsenkörper 3. Der Hohlraum kann vor dem Verschließen der Öffnung auch mit einem beliebigen Fluid gefüllt werden. Das Fluid, z.B. eine Flüssigkeit oder ein Gas, kann entsprechend dem gewünschten Brechungsindex ausgewählt werden. Dadurch lässt sich die Stärke der Brechung des Lichtstrahls L2 beeinflussen.

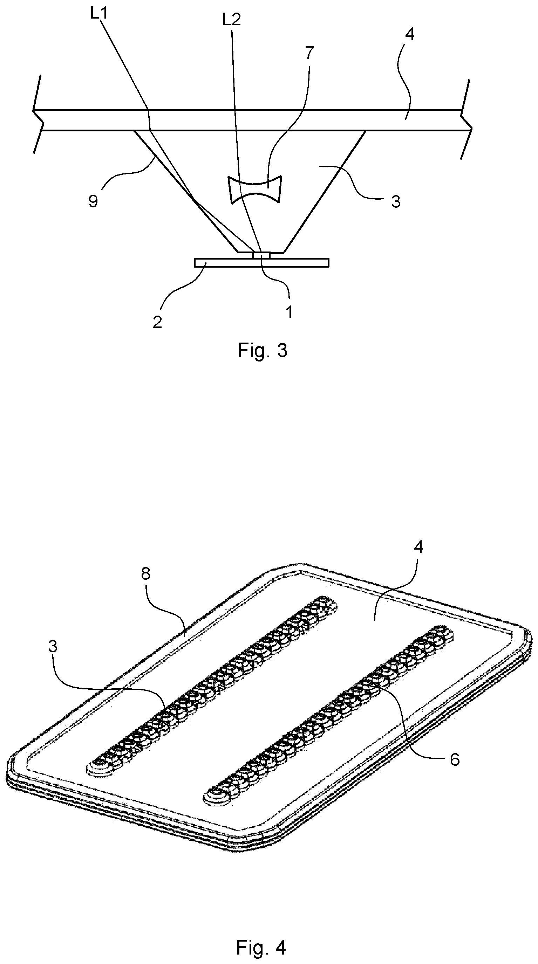

Eine Abwandlung der Ausführungsform nach Figur 2 ist in Figur 3 dargestellt. In dieser Ausführungsform befindet sich der Hohlraum 7 in dem Linsenkörper 3, so dass alle Oberflächen des Hohlraums 7 vom Material des Linsenkörpers 3 gebildet sind. Auch in dieser Ausführungsform kann eine Flüssigkeit oder ein Gas zum Auffüllen des Hohlraums 7 eingesetzt werden. In der Ausführungsform ist die Grenzfläche zwischen dem Linsenkörper 3 und dem Hohlraum 7 sowohl auf der Seite, welche zu der LED weist, als auch auf der der LED 1 abgewandten Seite sphärisch ausgebildet. Dadurch lässt sich die Brechung des Lichtstrahls L2 ähnlich wie in Figur 2 beeinflussen. Ein Vorteil besteht auch darin, dass zwei Oberflächen vorhanden sind, die durch Ausgestaltung der Krümmung eine Beeinflussung der Lichtbrechung ermöglichen.

Figur 4 stellt eine Ansicht einer Abdeckung 4 gemäß einer weiteren Ausführungsform dar. In dieser Ausführungsform sind mehrere Linsenkörper 3 hintereinander in zwei Reihen 6 angeordnet. Jeder Linsenkörper 3 ist einer LED (in Figur 4 nicht dargestellt) zugeordnet. Ferner umfasst die Abdeckung 4 in dieser Ausführungsform noch eine Dichtung 8, welche ebenfalls aus Silikon auf die Abdeckung 4 aufgedruckt ist. Der Druck der Abdichtung 8 kann im gleichen Prozess wie der Druck der Linsen 3 erfolgen. Gegebenenfalls können jedoch auch unterschiedliche Silikonmaterialien für die Linsenkörper 3 und die Abdichtung 8 sogar innerhalb des gleichen 3D-Druckverfahrens, benutzt werden. Die Abdichtung 8 steht im Kontakt mit Gehäusewänden der Beleuchtungseinrichtung (in den Figuren nicht dargestellt), um den Raum zwischen der Abdeckung 4 und einer Platine, auf welcher die LEDs angeordnet sind, abzudichten. Ferner kann die Dichtung auch dazu dienen, um die Abdeckung 4 mechanisch in einem Gehäuse der Beleuchtungseinrichtung zu halten.

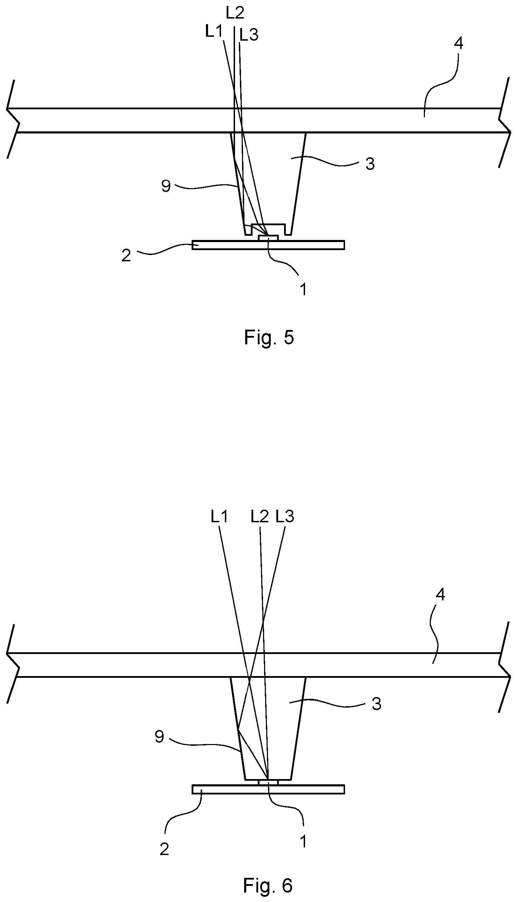

Die Figur 5 zeigt einen Querschnitt einer weiteren Ausführungsform mit einem Linsenkörper, der jedoch nicht in Kontakt mit der LED 1 steht. Bei dieser Ausführungsform findet eine Lichtbrechung auch beim Eintritt der Lichtstrahlung in dem Linsenkörper 3 statt. Ferner kann durch die Gestaltung der Lichteintrittsfläche des Linsenkörpers 3 die Lichtverteilung bestimmt werden. In der dargestellten Ausführungsform weist die Lichteintrittsfläche des Linsenkörpers 3 eine Vertiefung auf, so dass Lichtstrahlung seitlich der LED 1 und etwa entlang der optischen Achse der LED 1 in unterschiedliche geneigte Flächen des Linsenkörpers 3 eintritt. Die Lichtstrahlung kann ferner direkt durch den Linsenkörper in die Abdeckung 4 abgegeben werden, wie mit dem Lichtstrahl L1 gezeigt. Ferner können Lichtstrahlen auch an einer Seitenfläche des Linsenkörpers 3 reflektiert werden, wie durch die Lichtstrahlen L2 und L3 dargestellt.

In der Figur 6 ist eine Ausführungsform dargestellt, die sehr ähnlich zu der Ausführungsform nach Figur 5 ausgebildet ist, nur dass in dieser Ausführungsform die LED 1 in Kontakt mit der Lichteintrittsfläche des Linsenkörpers 3 steht. Wie in der Figur 6 dargestellt, tritt dabei das Licht der LED 1 direkt in den Linsenkörper 3 ein ohne vorherige Brechung. Das hat den Vorteil, dass auch keine Reflexion an der Lichteintrittsfläche der Linse stattfindet, so dass der Gesamtwirkungsgrad der Beleuchtungseinrichtung erhöht werden kann. Ferner ändert sich die erzeugte Lichtverteilung, weil eine Lichtablenkung an der Eintrittsfläche des Linsenkörpers 3 stattfindet.

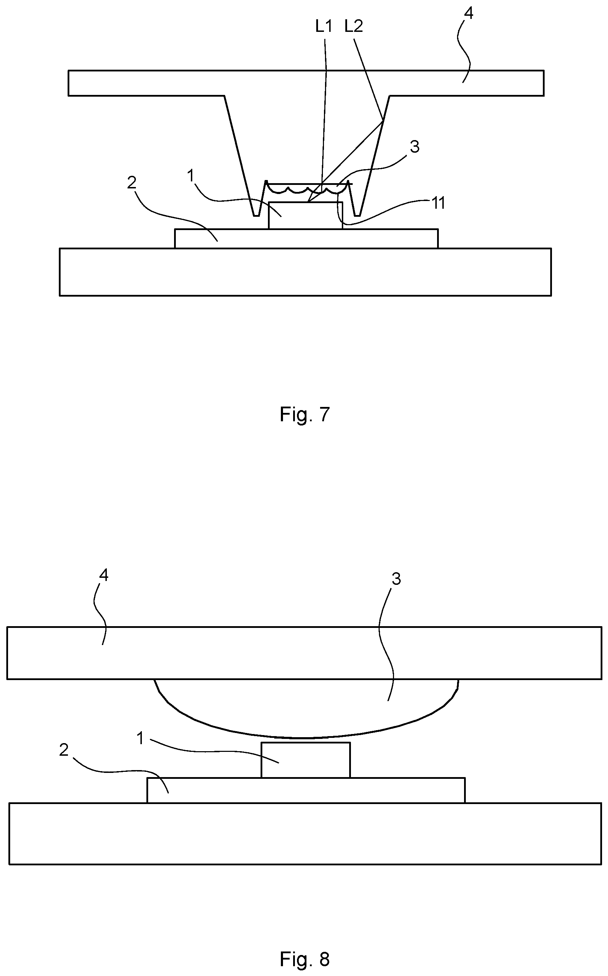

In der Figur 7 ist eine weitere Ausführungsform dargestellt, bei welcher die lichttechnische Abdeckung 4 selbst auch die Form einer Freiformlinse aufweist. Erfindungsgemäß weist die Abdeckung 4 eine domförmige Erhebung auf, die sich in Richtung zu der LED 1 erstreckt. Die Abdeckung 4 ist an der zur LED 1 weisenden Lichteintrittsseite mit einem Linsenkörper 3 aus Silikon bedruckt. Erfindungsgemäß weist der Linsenkörper 3 eine Mikrostruktur 11 auf, deren Erhebungen eine Abmessung aufweisen, die kleiner als der mittlere Durchmesser der LED 1 ist. Die Erhebungen dienen zur Aufweitung des Lichtbündels beim Eintritt in die Abdeckung 4.

In der Figur 8 ist eine Ausführungsform dargestellt, bei welcher der Linsenkörper 3 eine sphärische Oberfläche definiert. In der dargestellten Ausführungsform ist die Oberfläche des Linsenkörpers 3 gegenüber der LED konkav ausgebildet. Dieser Linsenkörper 3 eignet sich zum Bündeln des von der LED 1 austretenden Lichts, um eine kreissymmetrische Lichtverteilung entlang der optischen Achse der LED 1 zu erzeugen.

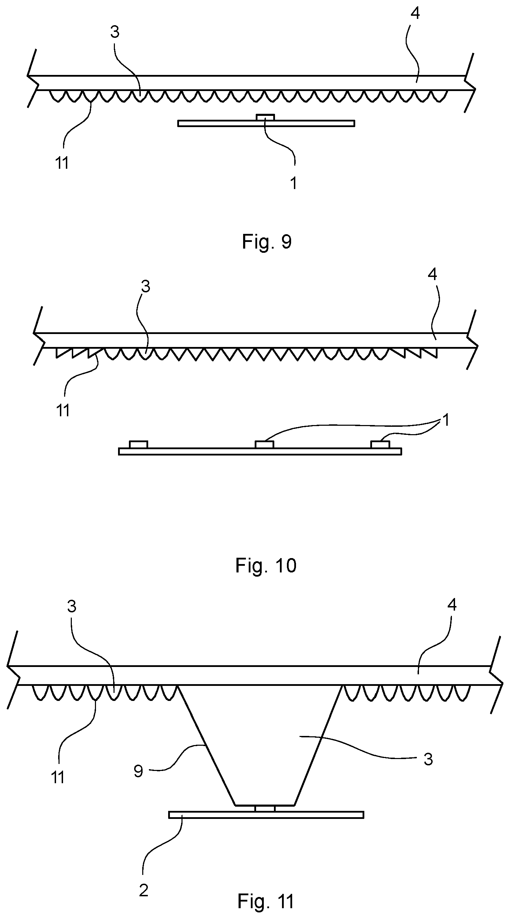

Die Figuren 9 und 10 zeigen eine Ausführungsform, bei welcher der Linsenkörper 3 zur Bildung einer Mikrostruktur 11 an der Abdeckung 4 aus Silikon aufgedruckt ist. Die Mikrostruktur 11 kann wellenförmig wie in Figur 9 oder prismenförmig wie in Figur 10 dargestellt, ausgebildet sein. Die Mikrostruktur 11 kann beispielsweise dafür vorgesehen sein, um bei Lichteintritt des Lichts der LED 1 in die Abdeckung das Licht zu streuen. In der Ausführungsform gemäß Figur 10 weist die Mikrostruktur 11 unterschiedliche Teilbereiche auf, welche verschiedene Lichtverteilungen erzeugen, z.B. kann die Mikrostruktur in der Art einer Fresnel-Linse ausgebildet sein. Ferner sind in dieser Ausführungsform mehrere LEDs vorgesehen, die in regelmäßigen Abständen auf der Platine 2 angeordnet sind. Die Mikrostruktur 11 kann für eine Lichtaufweitung oder eine Lichtbündelung des von den LEDs 1 abgegebenen Lichts sorgen. Es ist zu verstehen, dass auch in allen anderen Ausführungsformen auch mehrere LEDs 1 auf der Platine 2 vorgesehen sein können. Vorzugsweise ist dann für jede einzelne LED wenigstens ein Linsenkörper 3 vorgesehen oder, wie in der Figur 10 dargestellt, ein Linsenkörper in Form einer Mikrostruktur 11, der sich über mehrere LEDs erstreckt.

Die Figur 11 zeigt eine Ausführungsform, bei welcher ein Linsenkörper 3 mit angrenzenden Mikrostrukturen 11 auf der Abdeckung 4 aufgedruckt ist. In dieser Ausführungsform dienen die Seitenflächen 9 des Linsenkörpers 3, ähnlich wie in den Figuren 1 und 2, um wenigstens einen Teil der Lichtstrahlung der LED 1 total zu reflektieren. Ferner tritt aus dem Linsenkörper 3 auch Licht aus, welches in der Mikrostruktur 11 weiter verteilt wird, bevor diese Lichtstrahlung in die Abdeckung 4 eintritt.

Die vorhergehend dargestellten Ausführungsformen zeigen verschiedene Details der vorliegenden Erfindung, die auch in Kombination vorliegen können. Beispielsweise können Hohlräume 7, wie in den Figuren 2 und 3 dargestellt, auch in den Linsenkörper 3 der übrigen Ausführungsformen integriert sein. Ferner können die Mikrostrukturen 11, die zum Linsenkörper 3 gehören, auch an Lichteintrittsflächen direkt bei der LED 1 vorgesehen sein. Ferner ist es möglich, in allen Ausführungsformen auch unterschiedliche Linsenmaterialien zu kombinieren. Vorzugsweise ist dabei ein weicheres Silikonmaterial des Linsenkörpers 3 direkt an der LED 1 vorgesehen, um diese vor mechanischer Beschädigung zu schützen, wenn der Linsenkörper 3 direkt die LED 1 berührt. Der Brechungsindex des Silikons im Linsenkörper 3 bzw. der Mikrostruktur 11 kann größer oder kleiner als der Brechungsindex in der lichttechnischen Abdeckung 4 sein. Die lichttechnische Abdeckung 4 ist nicht notwendigerweise, wie bei den dargestellten Ausführungsformen, eben ausgeführt. Die Abdeckung kann auch eine Krümmung aufweisen. Allgemein lässt sich die Beleuchtungseinrichtung für verschiedene Arten von Innen- oder Außenleuchten einsetzen. Die Beleuchtungseinrichtung kann auch lediglich ein LED-Modul sein, welches in ein Gehäuse einer Leuchte eingesetzt wird.

### BEZUGSZEICHENLISTE

- 1: LED
- 2: PCB
- 3: Linse
- 4: lichttechnische Abdeckung
- 5: Teil eines Leuchtengehäuses
- 6: Reihe von Linsenkörpern
- 7: Hohlraum
- 8: Silikondichtung
- 9: Grenzfläche für Totalreflexion
- 11: Linsenkörper in Form von Mikrostruktur

## Patentansprüche

1. Beleuchtungseinrichtung umfassend eine lichttechnische Abdeckung (4) sowie wenigstens eine Lichtquelle in Form einer LED (1),
**dadurch gekennzeichnet, dass** die Abdeckung (4) eine domförmige Erhebung aufweist, die sich in Richtung zu der LED (1) erstreckt und mit einer Oberfläche der LED (1) zugewandt angeordnet ist,
sowie einem Linsenkörper (3) aus Silikon, welcher mittels eines 3D-Drucks auf die der LED (1) zugewandten Oberfläche der domförmigen Erhebung der Abdeckung (4) aufgedruckt ist, und der Linsenkörper (3) auf der der LED (1) zugewandten Oberfläche eine Mikrostruktur (11) aufweist, die räumliche Erhebungen und/oder Vertiefungen definiert, deren Abmessungen kleiner als ein mittlerer Durchmesser der LED (1) sind.

2. Beleuchtungseinrichtung nach Anspruch 1, wobei der Linsenkörper (3) einen Hohlraum (7) umschließt.

3. Beleuchtungseinrichtung aus Anspruch 2, wobei der Hohlraum (7) vollständig von Material des Linsenkörpers (3) begrenzt ist, oder
der Hohlraum (7) von Material des Linsenkörpers (3) und der Oberfläche der Abdeckung (4) begrenzt ist.

4. Beleuchtungseinrichtung nach einem der Ansprüche 2 oder 3, wobei der Hohlraum (7) mit einer Flüssigkeit oder einem Gas gefüllt ist, welches einen anderen Brechungsindex aufweist als der Brechungsindex des Linsenkörpers (3) selbst.

5. Beleuchtungseinrichtung nach einem der vorhergehenden Ansprüche, wobei der Linsenkörper (3) aus unterschiedlichen Silikonmaterialien mit verschiedenen Brechungsindices gedruckt ist.

6. Beleuchtungseinrichtung nach einem der vorhergehenden Ansprüche, wobei der Linsenkörper (3) mit einer Kontaktfläche die LED (1) berührt.

7. Beleuchtungseinrichtung nach einem der vorhergehenden Ansprüche, wobei mehrere der genannten Linsenkörper (3) in 3D-Druck, insbesondere in einer oder mehreren Reihen (6) hintereinander, auf die Oberfläche der Abdeckung (4) gedruckt sind.

8. Beleuchtungseinrichtung nach einem der vorhergehenden Ansprüche, wobei die Abdeckung (4) ferner noch eine Silikondichtung (8) aufweist, die ebenfalls in 3D-Druck auf die Abdeckung (4) aufgedruckt ist, und die Silikondichtung (8) die Abdeckung (4) in der Beleuchtungseinrichtung gegenüber einem Gehäusewandabschnitt der Beleuchtungseinrichtung abdichtet.

9. Beleuchtungseinrichtung nach einem der vorhergehenden Ansprüche, wobei die lichttechnische Abdeckung (4) selbst als eine Freiformlinse ausgebildet ist, und insbesondere Seitenwände aufweist, die gegenüber der LED (1) und dem Linsenkörper so geneigt sind, dass Licht der LED (1), welches durch den Linsenkörper in die Abdeckung (4) eintritt, an den Seitenwänden totalreflektiert wird.

10. Beleuchtungseinrichtung nach einem der vorhergehenden Ansprüche, wobei der Linsenkörper (3) rotationssymmetrisch in Bezug auf eine optische Achse der LED (1) geformt ist.

11. Herstellungsverfahren für eine Beleuchtungseinrichtung nach einem der vorhergehenden Ansprüche, wobei das Herstellungsverfahren folgende Schritte aufweist:
Bereitstellen einer lichttechnischen Abdeckung (4) für die Beleuchtungseinrichtung;
Aufbringen eines Linsenkörpers (3) aus Silikon in einem 3D-Druckverfahren;
Anordnen der Abdeckung (4) in der Beleuchtungseinrichtung, wobei der Linsenkörper (3) in Richtung zu einer LED (1) weist,
**dadurch gekennzeichnet, dass** die Abdeckung (4) eine domförmige Erhebung aufweist, die sich in Richtung zu der LED (1) erstreckt und mit einer Oberfläche der LED (1) zugewandt angeordnet ist,
wobei der Linsenkörper (3) aus Silikon mittels des 3D-Drucks auf die der LED (1) zugewandten Oberfläche der domförmigen Erhebung der Abdeckung (4) aufgedruckt ist, und der Linsenkörper (3) auf der der LED (1) zugewandten Oberfläche eine Mikrostruktur (11) aufweist, die räumliche Erhebungen und/oder Vertiefungen definiert, deren Abmessungen kleiner als ein mittlerer Durchmesser der LED (1) sind.

## Claims

1. Lighting device comprising a lighting cover (4) and at least one light source in the form of an LED (1),
**characterized in that** the cover (4) has a dome-shaped elevation which extends in the direction of the LED (1) and is arranged with a surface facing the LED (1),
and a lens body (3) made of silicone, which is printed by means of 3D printing onto the surface of the dome-shaped elevation of the cover (4) facing the LED (1), and the lens body (3) has, on the surface facing the LED (1), a microstructure (11) which defines spatial elevations and/or depressions, the dimensions of which are smaller than an average diameter of the LED (1).

2. Lighting device according to Claim 1, wherein the lens body (3) encloses a cavity (7).

3. Lighting device according to Claim 2, wherein the cavity (7) is delimited completely by material of the lens body (3), or the cavity (7) is delimited by material of the lens body (3) and the surface of the cover (4).

4. Lighting device according to either of Claims 2 and 3, wherein the cavity (7) is filled with a liquid or a gas which has a different refractive index than the refractive index of the lens body (3) itself.

5. Lighting device according to one of the preceding claims, wherein the lens body (3) is printed from different silicone materials having different refractive indices.

6. Lighting device according to one of the preceding claims, wherein the lens body (3) touches the LED (1) with a contact surface.

7. Lighting device according to one of the preceding claims, wherein a plurality of said lens bodies (3) is printed onto the surface of the cover (4) in 3D printing, in particular in one or more rows (6) one behind the other.

8. Lighting device according to one of the preceding claims, wherein the cover (4) also has a silicone seal (8) which is also printed onto the cover (4) in 3D printing, and the silicone seal (8) seals the cover (4) in the lighting device with respect to a housing wall portion of the lighting device.

9. Lighting device according to one of the preceding claims, wherein the lighting cover (4) itself is formed as a free-form lens, and in particular has side walls which are inclined with respect to the LED (1) and the lens body such that light from the LED (1) which enters the cover (4) through the lens body is totally reflected at the side walls.

10. Lighting device according to one of the preceding claims, wherein the lens body (3) is formed rotationally symmetrically with respect to an optical axis of the LED (1).

11. Production method for a lighting device according to one of the preceding claims, wherein the production method has the following steps:
providing a lighting cover (4) for the lighting device;
applying a lens body (3) made of silicone in a 3D printing process;
arranging the cover (4) in the lighting device, wherein the lens body (3) faces in the direction of an LED (1),
**characterized in that** the cover (4) has a dome-shaped elevation which extends in the direction of the LED (1) and is arranged with a surface facing the LED (1),
wherein the lens body (3) made of silicone is printed onto the surface of the dome-shaped elevation of the cover (4) facing the LED (1) by means of the 3D printing, and the lens body (3) has, on the surface facing the LED (1), a microstructure (11) which defines spatial elevations and/or depressions, the dimensions of which are smaller than an average diameter of the LED (1).

## Revendications

1. Dispositif d'éclairage comprenant un recouvrement lumineux (4) ainsi qu'au moins une source de lumière sous la forme d'une LED (1),
**caractérisé en ce que** le recouvrement (4) présente un rehaussement en forme de dôme qui s'étend en direction de la LED (1) et est disposé avec une surface tournée vers la LED (1),
ainsi qu'un corps lentille (3) en silicone qui est imprimé au moyen d'une impression 3D sur la surface tournée vers la LED (1) du rehaussement en forme de dôme du recouvrement (4), et le corps lentille (3) présente sur la surface tournée vers la LED (1) une microstructure (11) qui définit des rehaussements et/ou des creux dans l'espace dont les dimensions sont inférieures à un diamètre moyen de la LED (1).

2. Dispositif d'éclairage selon la revendication 1, dans lequel le corps lentille (3) entoure une cavité (7).

3. Dispositif d'éclairage selon la revendication 2, dans lequel la cavité (7) est entièrement délimitée par le matériau du corps lentille (3), ou
la cavité (7) est délimitée par le matériau du corps lentille (3) et la surface du recouvrement (4).

4. Dispositif d'éclairage selon l'une quelconque des revendications 2 ou 3, dans lequel la cavité (7) est remplie d'un liquide ou d'un gaz ayant un indice de réfraction différent de l'indice de réfraction du corps lentille (3) lui-même.

5. Dispositif d'éclairage selon l'une quelconque des revendications précédentes, dans lequel le corps lentille (3) est imprimé à partir de différents matériaux de silicone ayant différents indices de réfraction.

6. Dispositif d'éclairage selon l'une quelconque des revendications précédentes, dans lequel le corps lentille (3) est en contact avec la LED (1) avec une surface de contact.

7. Dispositif d'éclairage selon l'une quelconque des revendications précédentes, dans lequel plusieurs desdits corps lentilles (3) sont imprimés sur la surface du recouvrement (4) en impression 3D, en particulier en une ou plusieurs rangées (6) les unes derrière les autres.

8. Dispositif d'éclairage selon l'une quelconque des revendications précédentes, dans lequel le recouvrement (4) présente en outre un joint d'étanchéité en silicone (8) qui est également imprimé sur le recouvrement (4) en impression 3D, et le joint d'étanchéité en silicone (8) étanchéifie le recouvrement (4) dans le dispositif d'éclairage par rapport à une section de paroi de boîtier du dispositif d'éclairage.

9. Dispositif d'éclairage selon l'une quelconque des revendications précédentes, dans lequel le recouvrement lumineux (4) lui-même est réalisé sous la forme d'une lentille de forme libre, et présente en particulier des parois latérales qui sont inclinées par rapport à la LED (1) et au corps lentille de telle sorte que la lumière de la LED (1) qui pénètre dans le recouvrement (4) à travers le corps lentille est totalement réfléchie sur les parois latérales.

10. Dispositif d'éclairage selon l'une quelconque des revendications précédentes, dans lequel le corps lentille (3) est formé de manière symétrique en rotation par rapport à un axe optique de la LED (1).

11. Procédé de fabrication d'un dispositif d'éclairage selon l'une quelconque des revendications précédentes, le procédé de fabrication comprenant les étapes suivantes :
la mise à disposition d'un recouvrement lumineux (4) pour le dispositif d'éclairage ;
l'application d'un corps lentille (3) en silicone dans un procédé d'impression 3D ;
l'agencement du recouvrement (4) dans le dispositif d'éclairage, le corps lentille (3) étant tourné vers une LED (1),
**caractérisé en ce que** le recouvrement (4) présente un rehaussement en forme de dôme qui s'étend en direction de la LED (1) et est disposé avec une surface tournée vers la LED (1),
dans lequel le corps lentille (3) en silicone est imprimé au moyen de l'impression 3D sur la surface tournée vers la LED (1) du rehaussement en forme de dôme du recouvrement (4), et le corps lentille (3) présente sur la surface tournée vers la LED (1) une microstructure (11) qui définit des rehaussements et/ou des creux dans l'espace dont les dimensions sont inférieures à un diamètre moyen de la LED (1).
